# EUROPÄISCHE PATENTSCHRIFT

(11) **EP 3 641 562 B1**
(45) Veröffentlichungstag und Bekanntmachung des Hinweises auf die Patenterteilung: **01.04.2026**
(21) Anmeldenummer: 18733234.1
(22) Anmeldetag: 20.06.2018
(51) Int. Cl.: A23L 5/40, A23L 2/56, A23L 2/58, A23D 7/01, A23L 27/00, A23L 27/12, A23L 5/44

(54) **ZUBEREITUNG ZUM FÄRBEN UND/ODER AROMATISIEREN VON NAHRUNGSMITTELN**
PREPARATION FOR COLOURING AND/OR FLAVOURING FOODSTUFFS
PRÉPARATION POUR COLORER ET/OU AROMATISER DES ALIMENTS

(30) Priorität: 23.06.2017 DE 102017113975
(43) Veröffentlichungstag der Anmeldung: 29.04.2020
(73) Patentinhaber: Sensient Technologies Europe GmbH, 21502 Geesthacht (DE)
(72) Erfinder: KLINGENBERG, Andreas, 21502 Geesthacht (DE); ANETZBERGER, Sascha, 21502 Geesthacht (DE); NOVAK, Christian, 21502 Geesthacht (DE)
(74) Vertreter: RGTH
(86) Internationale Anmeldenummer: PCT/EP2018/066376
(87) Internationale Veröffentlichungsnummer: WO 2018/234364

(56) Entgegenhaltungen:
- DE-A1- 102007 057 258
- DE-A1- 102015 111 743
- JP-A- 2001 346 557
- DAYANE ROSALYN IZIDORO ET AL: "BRAZILIAN ARCHIVES OF BIOLOGY AND TECHNOLOGY Rheological Properties of Emulsions Stabilized by Green Banana (Musa cavendishii) Pulp Fitted by Power Law Model INTRODUCTION", ARCH. BIOL. TECHNOL. V, 1 December 2009 (2009-12-01), pages 1541 - 1553, XP055493197, Retrieved from the Internet <URL:http://www.scielo.br/pdf/babt/v52n6/a26v52n6.pdf> [retrieved on 20180717]
- NINO T CHATSISVILI ET AL: "Physicochemical properties of a dressing-type o/w emulsion as influenced by orange pulp fiber incorporation", LWT- FOOD SCIENCE AND TECHNOLOGY, ACADEMIC PRESS, UNITED KINGDOM, vol. 46, no. 1, 23 August 2011 (2011-08-23), pages 335 - 340, XP028343154, ISSN: 0023-6438, [retrieved on 20110929], DOI: 10.1016/J.LWT.2011.08.019
- SHANMUGAM AKALYA ET AL: "Characterization of Ultrasonically Prepared Flaxseed oil Enriched Beverage/Carrot Juice Emulsions and Process-Induced Changes to the Functional Properties of Carrot Juice", FOOD AND BIOPROCESS TECHNOLOGY ; AN INTERNATIONAL JOURNAL, SPRINGER-VERLAG, NEW YORK, vol. 8, no. 6, 26 February 2015 (2015-02-26), pages 1258 - 1266, XP035498632, ISSN: 1935-5130, [retrieved on 20150226], DOI: 10.1007/S11947-015-1492-1
- ANTON RAHMADI ET AL: "Dragon fruit juice addition in palm oil-pumpkin emulsion: panelist acceptance and antioxidant capacity", J. TEKNOL. DAN INDUSTRI PANGAN, 1 January 2017 (2017-01-01), pages 122 - 128, XP055493279, Retrieved from the Internet <URL:http://journal.ipb.ac.id/index.php/jtip/article/view/16696/14377> [retrieved on 20180717]
- ANONYMOUS: "GNPD - Purune Carrot Cheese - Record ID: 600793", GNPD-NUTRITION DATABASE, 1 October 2006 (2006-10-01), pages 1 - 2, XP055493388, Retrieved from the Internet <URL:http://www.gnpd.com/sinatra/recordpage/600793/from_search/CcaJINBqtF/?page=1&cookie_test=yes> [retrieved on 20180718]

## Beschreibung

Die vorliegende Erfindung betrifft eine Zubereitung zum Färben und/oder Aromatisieren von Nahrungsmitteln umfassend (i) eine Ölphase umfassend ein, zwei oder mehrere aktive Inhaltsstoffe ausgewählt aus der Gruppe bestehend aus Lebensmittelfarbstoffen, färbenden Lebensmitteln, Aromen und aromatisierenden Lebensmitteln, wobei die Ölphase in Form von Öltröpfchen vorliegt und die Öltröpfchen einen Durchmesser von 50 µm oder weniger aufweisen, (ii) ein oberflächenaktives System, umfassend die Trockensubstanz von einem, zwei oder mehreren Nahrungsmitteln ausgesucht aus der Gruppe bestehend aus Früchten und Gemüse und Teilen davon und (iii) Wasser. Es handelt sich dabei um Öl-in-Wasser-Emulsionen und die sprühgetrockneten Produkte derselben. Weiter betrifft die vorliegende Erfindung verschiedene Verfahren zur Herstellung der Zubereitungen.

### Stand der Technik

Die Endverbraucher von verarbeiteten Lebensmitteln fordern zunehmend, den Einsatz von Lebensmittel-Zusatzstoffen und insbesondere von Emulgatoren und ähnlichen Stoffen, wie zum Beispiel Gummi arabicum und modifizierte Stärken, zu reduzieren oder möglichst ganz darauf zu verzichten. Auf der anderen Seite werden Lebensmittel vom Endverbraucher nur dann angenommen, wenn die Lebensmittel auch weiterhin die gewohnten Farben mit Farbtönen in bekannter Intensität und das gewohnte Aroma aufweisen und auch sonst den üblichen Qualitätsanforderungen, wie Lagerfähigkeit, Freiheit von Niederschlägen und Ablagerungen am Flaschenhals, etc., aufweisen.

Die Herstellung von gefärbten und/oder aromatisieren Lebensmitteln erfordert jedoch in der Regel die Verwendung von Emulgatoren, Gummi arabicum und/oder modifizierten Stärken, wenn Farb- oder Aromastoffe verwendet werden, die nicht in dem Lebensmittel löslich sind. Da die weitaus meisten Lebensmittel wasserhaltig und damit lipophob sind, erfordert die Verwendung von lipophilen Farbstoffen oft die Verwendung von Emulgatoren. Zu diesem Zweck sind eine Reihe von Emulgatoren, Gummi arabicum und modifizierten Stärken lebensmittelrechtlich zugelassen, bei denen es sich meist um aus Pflanzenmaterial gewonnene und damit um natürliche Produkte handelt. Dennoch wird auch die Verwendung solcher Lebensmittel-Zusatzstoffe von Verbrauchern zunehmend kritisch gesehen. Um den Wünschen der Verbraucher entsprechen zu können, müssen daher Zubereitungen und Verfahren entwickelt werden, die es erlauben, lipophile Substanzen in lipophoben Lebensmitteln zu verwenden, ohne die bekannten und/oder zugelassenen Emulgatoren, Gummi arabicum oder modifizierte Stärken zu verwenden.

Insbesondere färbende Lebensmittel, wenn basierend auf öligen pflanzlichen Extrakten mit fettlöslichen Pigmenten, i.e. öllösliche färbende Lebensmittel (z. B. Paprika-Öl, Curcuma-Ölextrakt), können in der Regel nicht ohne den Einsatz von lebensmittelrechtlich zugelassenen Emulgatoren, Gummi arabicum, modifizierten Stärken oder ähnlichen Stoffen in lipophobe Lebensmittel eingebracht werden.

Die JP 2001-346557 A offenbart kohlensäurehaltige Getränke, die in einer Ölphase Farb- oder Geruchsstoffe enthalten, die mit Hilfe von Emulgatoren emulgiert sind und die zusätzlich Pulpe enthalten.

Die DE 10 2007 057258 A1 betrifft Öl-in-Wasser Emulsionen, die zur Geschmacksgebung von Bio-Lebensmitteln eingesetzt werden. Hierbei wird der Emulsionsbildung geschmacksgebendes Öl mit einem Polysaccharid vermischt und zur Herstellung einer Emulsion in eine Proteinlösung dispergiert. Die Aufrahm- und Trübungsstabilität der Emulsion wird über das Öl-Polysaccharid-Verhältnis eingestellt.

Die DE 10 2015 111743 A1 beschreibt Verfahren zur Herstellung von zum menschlichen Verzehr geeigneten färbenden Zubereitungen umfassend die Schritte Bereitstellen von getrockneten Pflanzen oder Pflanzenteilen, Mazerieren der bereitgestellten Pflanzen oder Pflanzenteile in Gegenwart von Wasser, einer Pektinase und einer Cellulase, Zusatz eines Pflanzenöls zu der mazerierten Mischung und Mischen des Pflanzenöls mit der enthaltenden Mischung. Insbesondere handelt es sich bei den getrockneten Pflanzen oder Pflanzenteilen um getrocknete Gewürzpulver, wie Pulver von Kurkuma.

Der Artikel Izidoro et al, "Rheological Properties of Emulsions Stabilized by Green Banana (Musa cavendishii) Pulp Fitted by Power Law Model", Arch. Biol. Technol. v, Seiten 1541-1553, offenbart Öl-in-Wasser Emulsionen, die als Mayonnaise dienen sollen. Diese umfassen 10 bis 20 % Wasser, 20 bis 25 % Sojaöl und 60-70 % Bananen-Pulpe.

Der Artikel Chatsisvili et al., "Physicochemical properties of a dressing-type o/w emulsion as influenced by orange pulp fiber incorporation", LWT - Food Science and Technology, Academic Press, UK, Bd. 46, Nr. 1, Seiten 335-340, offenbart eine Öl-in-Wasser Emulsion, welche flüssiges Eigelb, Öl und Orangenpulpe enthält.

Der Artikel Shanmugam et al., "Characterization of Ultrasonically Prepared Flaxseed oil Enriched Beverage/Carrot Juice Emulsions and Process-Induced Changes to the Functional Properties of Carrot Juice", Food and Bioprocess Technology, Springer-Verlag, New York, Bd. 8, Nr. 6, Seiten 1258-1266, offenbart eine Wasser-in-Öl Emulsion enthaltend 99% Karottensaft sowie 1% Leinöl.

Der Artikel Rahmadi et al, "DRAGON FRUIT JUICE ADDITION IN PALM OIL-PUMPKIN EMULSION: PANELIST ACCEPTANCE AND ANTIOXIDANT CAPACITY" J. Teknol. dan Industri Pagan, Seiten 122-128, offenbart eine Wasser-in-Öl Emulsion enthaltend Kürbissaft, Drachenfruchtsaft, Palmöl (MSM), Carboxymethylcellulose, Xanthangummi, Zimt, Fruktosesirup, Zitronensäure und Himbeeraroma, welche durch Homogenisieren hergestellt wird.

Die Veröffentlichung Anonymous: "GNPD-Purune Garrot Cheese-Record ID: 600793", GNPD, Seiten 1-2, ist ein Produktdatenblatt eines Käses, der Karottensaft enthält.

### Aufgabe der vorliegenden Erfindung

Es ist daher die Aufgabe der vorliegenden Erfindung Mittel bereitzustellen, die es erlauben lipophile Färbemittel und Aromen in hydrophilen und lipophoben Lebensmitteln zu verwenden. Die Aufgabe besteht insbesondere darin, die Verwendung von herkömmlichen oberflächenaktiven Verbindungen, insbesondere von Emulgatoren, Gummi arabicum oder modifizierten Stärken unnötig zu machen. Bevorzugt sollen die erfindungsgemäßen Mittel ausschließlich Lebensmittel enthalten.

Insbesondere sollte der Einsatz von öllöslichen Lebensmittelfarbstoffen, öllöslichen färbenden Lebensmitteln, öllöslichen Aromen und öllöslichen aromatisierenden Lebensmitteln ohne den Zusatz von Emulgatoren, Gummi arabicum oder modifizierten Stärken in wässrigen Lebensmitteln wie Süßwaren, Fruchtzubereitungen, Joghurt und Getränken ermöglicht werden. Dabei sollen die neuen Mittel möglichst langzeitstabil und farbecht sein. Sie sollen ferner die Herstellung von dauerhaft und intensiv gefärbten und/oder mit einem intensiven und über lange Zeit unveränderten Aroma ausgestatteten Lebensmitteln erlauben. Auch sollen Färbemittel und Aromen bereitgestellt werden, die bei Verwendung in Getränken keine oder so wenig Niederschläge wie möglich an den Flaschenhälsen oder an Innenwänden oder Böden von Behältern hinterlassen.

### Beschreibung der Erfindung

Die vorliegende Erfindung betrifft eine Zubereitung umfassend
(i) eine Ölphase umfassend
   - ein, zwei oder mehrere aktive Inhaltsstoffe ausgewählt aus der Gruppe bestehend aus Lebensmittelfarbstoffen, färbenden Lebensmitteln, Aromen und aromatisierenden Lebensmitteln,
   - wobei die Ölphase in Form von Öltröpfchen vorliegt und
   - die Öltröpfchen einen Durchmesser von 50 µm oder weniger aufweisen, wobei zur Bestimmung des Durchmessers der Öltröpfchen das in der Beschreibung genannte Messverfahren eingesetzt wird
(ii) ein oberflächenaktives System, umfassend
   - die Trockensubstanz von einem, zwei oder mehreren Nahrungsmitteln ausgesucht aus der Gruppe bestehend aus Früchten und Gemüse und Teilen davon und
(iii) Wasser.

wobei die Zubereitung wenigstens 10 Gew.-%, der Trockensubstanz von einem, zwei oder mehreren Nahrungsmitteln ausgesucht aus der Gruppe bestehend aus Früchten und Gemüse und Teilen davon, enthält, wobei die Gewichtsprozente auf das Gewicht der Zubereitung bezogen sind, und
wobei die Nahrungsmittel ausgesucht sind aus der Gruppe bestehend aus Karottenkonzentrat, Karottenkonzentrat mit Pulpe, Karottensaftkonzentrat, Karottensaftkonzentrat mit Pulpe, Kürbiskonzentrat, Kürbiskonzentrat mit Pulpe Kürbissaftkonzentrat und Kürbissaftkonzentrat mit Pulpe, wobei die Zubereitung 1 bis 20 Gew.-% Ölphase und bis zu 70 Gew.-% Wasser umfasst, wobei es sich um eine Öl-in-Wasser-Emulsion handelt,
dadurch gekennzeichnet, dass die Zubereitung keinen Lebensmittel-Zusatzstoff enthält, der ausgesucht ist aus der Gruppe bestehend aus Lecithinen (E 322), Gummi arabicum (E414), Polysorbate (E 432 - E 436), Ammoniumsalze der Phosphatidsäuren (E 442), Saccharoseacetatisobutyrat (E 444), Salze von Speisefettsäuren (E 470), Mono- und Diglyceride von Speisefettsäuren (E 471), veresterte Mono- und Diglyceride von Speisefettsäuren (E 472), Essigsäureester von Mono- und Diglyceriden von Speisefettsäuren (E 472a), Citronensäureester von Mono- und Diglyceriden von Speisefettsäuren (E 472c), Zuckerester von Speisefettsäuren (E 473), Zuckerglyceride (E 474), Polyglycerinester von Speisefettsäuren (E 475), Polyglycerin-Polyricinoleat (E 476), Propylenglycolester von Speisefettsäuren (E 477), Stearoylacetylate (E 481, E 482), Stearyltatrat (E 483), Sorbitanester von Speisefettsäuren (E 491 - E 495), Saponinen (z.B. Quillaja-Extrakt E 999) und modifizierten Stärken E1450.

Die Abkürzung "µm" steht hierbei für Mikrometer.

Die vorliegende Erfindung beruht auf der überraschenden Erkenntnis, dass die Inhaltsstoffe von Früchten und Gemüsen ein oberflächenaktives System bilden, welches dazu geeignet ist, Öltröpfchen in wässrigen Systemen zu emulgieren. Die Inhaltsstoffe von Früchten und Gemüsen sind fähig, Öl-in-Wasser-Emulsionen in Lebensmitteln zu formen und zu stabilisieren. Sie können daher herkömmliche Emulgatoren, Gummi arabicum, modifizierte Stärken und ähnliche Stoffe ersetzen.

Die erfindungsgemäßen Zubereitungen können flüssig breiig oder auch fest sein. Es handelt sich um Öl-in-Wasser-Emulsionen.

Die Trockensubstanz ist der Anteil (Inhaltsstoff) einer Frucht oder eines Gemüses oder eines Teils davon, der nach dem Entfernen des Wassers verbleibt. Dabei ist die Bedeutung des Wortes Trockensubstanz nicht auf tatsächlich getrocknete Stoffe beschränkt, sondern bezeichnet auch den Teil von nicht getrockneten Gemüsen oder Früchten oder Teilen davon, der nach Trocknung derselben verbleiben würde. Die Bestimmung des Gehalts an Trockensubstanz erfolgt dabei bevorzugt durch Trocknung bei 105°C bis zur Gewichtskonstanz.

Es ist dabei wichtig, dass das erfindungsgemäße oberflächenaktive System umfassend die Trockensubstanz von einem, zwei oder mehreren Nahrungsmitteln ausgesucht aus der Gruppe bestehend aus Früchten und Gemüse und Teilen davon keine weiteren Stoffe enthalten muss, um seine oberflächenaktive Wirkung zu entfalten. Die emulgierende Wirkung des erfindungsgemäßen oberflächenaktiven Systems ist derart ausgeprägt, das keine weiteren Emulgatoren, Gummi arabicum, modifizierte Stärken oder andere Zusatzstoffe insbesondere keine anderen Lebensmittel-Zusatzstoffe notwendig sind, um stabile Emulsionen zu erzeugen. Bevorzugt besteht das oberflächenaktive System aus der Trockensubstanz von einem, zwei oder mehreren Nahrungsmitteln ausgesucht aus der Gruppe bestehend aus Früchten und Gemüse und Teilen davon. Die erfindungsgemäßen Zubereitungen können daher vollständig aus Lebensmitteln zusammengesetzt sein und müssen keinerlei Zusatzstoffe enthalten. Sie können somit als Lebensmittel klassifiziert werden. Bevorzugt handelt es sich daher bei den erfindungsgemäßen Zubereitungen um Lebensmittel. Es können jedoch Lebensmittel und Lebensmittel-Zusatzstoffe hinzugefügt werden. Bevorzugt enthalten die erfindungsgemäßen Zubereitungen jedoch keine Emulgatoren. Erfindungsgemäß enthalten die Zubereitungen keinen Stoff ausgesucht aus der Gruppe bestehend aus Gummi arabicum und modifizierten Stärken. Ganz besonders bevorzugt enthalten die erfindungsgemäßen Zubereitungen überhaupt keine Lebensmittel-Zusatzstoffe. Mit Lebensmittel-Zusatzstoff ist dabei ein Stoff gemeint, der am Tag der Einreichung der deutschen Erstanmeldung dieser Patentanmeldung in der EU als Lebensmittel-Zusatzstoff zugelassen ist. Bei der Verwendung solcher erfindungsgemäßen Zubereitungen müssen daher keine Lebensmittel-Zusatzstoffe auf der Lebensmittelverpackung deklariert werden.

Erfindungsgemäß enthalten die Zubereitungen keine Lebensmittel-Zusatzstoffe, die ausgesucht sind aus der Gruppe bestehend aus Lecithinen (E 322), Gummi arabicum (E414), Polysorbate (E 432 - E 436), Ammoniumsalze der Phosphatidsäuren (E 442), Saccharoseacetatisobutyrat (E 444), Salze von Speisefettsäuren (E 470), Mono- und Diglyceride von Speisefettsäuren (E 471), veresterte Mono- und Diglyceride von Speisefettsäuren (E 472), Essigsäureester von Mono- und Diglyceriden von Speisefettsäuren (E 472a), Citronensäureester von Mono- und Diglyceriden von Speisefettsäuren (E 472c), Zuckerester von Speisefettsäuren (E 473), Zuckerglyceride (E 474), Polyglycerinester von Speisefettsäuren (E 475), Polyglycerin-Polyricinoleat (E 476), Propylenglycolester von Speisefettsäuren (E 477), Stearoylacetylate (E 481, E 482), Stearyltatrat (E 483), Sorbitanester von Speisefettsäuren (E 491 - E 495), Saponinen (z.B. Quillajaextrakt E999) und modifizierten Stärken (E 1450).

Bevorzugt enthalten die erfindungsgemäßen Zubereitungen zusätzlich zu dem erfindungsgemäßen oberflächenaktiven System nicht mehr als 5 Gew.-%, bevorzugt nicht mehr als 3 Gew.-% und besonders bevorzugt nicht mehr als 1 Gew-% eines oder mehrerer Emulgatoren. Insbesondere gilt dies für Emulgatoren die aus der vorstehend genannten Gruppe ausgesucht sind. Besonders bevorzugt enthalten die erfindungsgemäßen Zubereitungen zusätzlich zu dem erfindungsgemäßen oberflächenaktiven System jedoch keine Emulgatoren.Die erfindungsgemäße Zubereitung enthält keinen Emulgator der aus der vorstehend genannten Gruppe ausgesucht ist. Besonders bevorzugt enthält die erfindungsgemäße Zusammensetzung weder Emulgatoren noch einen Lebensmittel-Zusatzstoff ausgesucht aus der Gruppe bestehend aus Gummi arabicum und modifizierten Stärken. Insbesondere enthält die erfindungsgemäße Zubereitung keinen Stoff, der aus den vorstehend genannten Gruppen der Lebensmittel-Zusatzstoffe ausgesucht ist. Am meisten bevorzugt enthält die erfindungsgemäße Zusammensetzung überhaupt keine Lebensmittel-Zusatzstoffe.

Bevorzugt ist die erfindungsgemäße Zubereitung zur Verwendung in Lebensmitteln vorgesehen. Daher werden bevorzugt nur für den menschlichen Verzehr geeignete Teile von Früchten und Gemüsen verwendet, wie dies in der Lebensmittelindustrie üblich ist.

Während das erfindungsgemäße oberflächenaktive System bei allen Mengenverhältnissen von Ölphase zum oberflächenaktiven System eine oberflächenaktive Wirkung aufweist, ist eine erfindungsgemäße Zubereitung bevorzugt, die Ölphase und oberflächenaktives System im Gewichtsverhältnis von 1 zu 1 bis 1 zu 80 umfasst. Werden geringere relative Mengen des oberflächenaktiven Systems eingesetzt, so werden Nahrungsmittelemulsionen und -dispersionen, die mit Hilfe der erfindungsgemäße Zubereitung gefärbt oder aromatisiert werden, zunehmend instabil. Dies kann sich dadurch ausdrücken, dass im Lebensmittel eine makroskopische Ölphase sichtbar wird oder sich der Farbton, der Geruch oder der Geschmack ändert. Eine größere Menge des oberflächenaktiven Systems ist in der Regel unnötig und daher auch unnötig teuer. Er kann Einfluss auf den Geschmack der Lebensmittel haben.

Erfindungsgemäß enthalten die erfindungsgemäßen Zubereitungen wenigstens 10, bevorzugt wenigstens 20, besonders bevorzugt wenigstens 30 und am meisten bevorzugt wenigstens 40 Gew.-% der Trockensubstanz von einem, zwei oder mehreren Nahrungsmitteln ausgesucht aus der Gruppe bestehend aus Früchten und Gemüse und Teilen davon. Wenn die Menge an der vorgenannten Trockensubstanz geringer wird, neigen die Zubereitungen zur Instabilität, insbesondere, wenn es sich um Emulsionen handelt. Auch daraus hergestellte gefärbte Nahrungsmittelemulsionen neigen bei geringen Mengen der vorgenannten Trockensubstanz zur Instabilität. Weiterhin enthalten die erfindungsgemäßen Zubereitungen bis zu 20, besonders bevorzugt bis zu 15 und ganz besonders bevorzugt bis zu 12 Gew.-% der Ölphase. Ferner enthalten die erfindungsgemäßen Zubereitungen bis zu 70, besonders bevorzugt bis zu 60 und ganz besonders bevorzugt bis zu 50 und am meisten bevorzugt bis zu 40 Gew.-% Wasser. Liegen die erfindungsgemäßen Zubereitungen als Pulver vor, so ist der Gehalt an Wasser bevorzugt 10 Gew.-% oder weniger, besonders bevorzugt 5 Gew.-% oder weniger und ganz besonders bevorzugt 3 Gew.-% oder weniger.

Demgemäß enthalten die erfindungsgemäßen Zubereitungen wenigstens 10 Gew.-% der Trockensubstanz von einem, zwei oder mehreren Nahrungsmitteln ausgesucht aus der Gruppe bestehend aus Früchten und Gemüse und Teilen davon, bis zu 20 Gew.-% der Ölphase und bis zu 70 Gew.-% Wasser. Besonders bevorzugt enthalten die erfindungsgemäßen Zubereitungen wenigstens 20 Gew.-% der Trockensubstanz von einem, zwei oder mehreren Nahrungsmitteln ausgesucht aus der Gruppe bestehend aus Früchten und Gemüse und Teilen davon, bis zu 20 Gew.-% der Ölphase und bis zu 60 Gew.-% Wasser. Ganz besonders bevorzugt enthalten die erfindungsgemäßen Zubereitungen wenigstens 30 Gew.-% der Trockensubstanz von einem, zwei oder mehreren Nahrungsmitteln ausgesucht aus der Gruppe bestehend aus Früchten und Gemüse und Teilen davon, bis zu 15 Gew.-% der Ölphase und bis zu 55 Gew.-% Wasser. Am meisten bevorzugt enthalten die erfindungsgemäßen Zubereitungen wenigstens 40 Gew.-% der Trockensubstanz von einem, zwei oder mehreren Nahrungsmitteln ausgesucht aus der Gruppe bestehend aus Früchten und Gemüse und Teilen davon, bis zu 15 Gew.-% der Ölphase und bis zu 45 Gew.-% der Wasser.

Erfindungsgemäß sind die aktiven Inhaltsstoffe der Ölphase ausgesucht aus der Gruppe bestehend aus färbenden Lebensmitteln und aromatisierenden Lebensmitteln. Weiterhin erfindungsgemäß sind die aktiven Inhaltsstoffe ausgesucht aus der Gruppe bestehend aus Lebensmittelfarbstoffen und färbenden Lebensmitteln. Ganz besonders bevorzugt sind die aktiven Inhaltsstoffe färbende Lebensmittel. Ganz besonders bevorzugt ist die Ölphase ein Lebensmittel.

Bevorzugt ist insbesondere eine erfindungsgemäße Zubereitung deren Ölphase wenigstens einen Kurkuma-Ölextrakt oder wenigstens ein Paprika-Öl oder beide umfasst. Besonders bevorzugt besteht die Ölphase aus wenigstens einem Kurkuma-Ölextrakt oder wenigstens einem Paprika-Öl oder aus beiden. Ebenfalls besonders bevorzugt umfasst die Ölphase wenigstens ein Paprika-Öl oder besteht daraus. Ganz besonders bevorzugt umfasst die Ölphase wenigstens einen Kurkuma-Ölextrakt. Am meisten bevorzugt besteht sie daraus.

Bevorzugt umfasst die Ölphase der erfindungsgemäßen Zubereitung 0,1 bis 45 Gew.- % aktive Inhaltsstoffe. Der Rest der Ölphase besteht in der Regel aus anderen lipophilen Substanzen. Besonders bevorzugt umfasst die Ölphase der erfindungsgemäßen Zubereitung 1 bis 40 Gew.-% aktive Inhaltsstoffe und ganz besonders bevorzugt 2 bis 30 Gew.-%. Bevorzugt besteht die gesamte Ölphase aus pflanzlichen Inhaltsstoffen. Die Ölphase kann neben den Farb- und Aromastoffen zusätzlich wenigstens ein Pflanzenöl umfassen. Ganz besonders bevorzugt umfasst die Ölphase Extrakte von Pflanzen oder Pflanzenteilen, die öllösliche Pigmente oder Aromen enthalten, welche mittels Extraktion durch ein lipophiles Lösungsmittel gewonnen werden. Bei dem Lösungsmittel kann es sich zum Beispiel um Hexan, Dichlormethan, Aceton, Methanol, Ethanol, Ethylacetat, um pflanzliche Öle oder um superkritisches Kohlendioxid handeln. Solche Extrakte sind zum Beispiel als öldispergierbare Extrakte oder auch Oleoresine bekannt. Sie können sowohl Pigmente als auch Aromastoffe enthalten. Solche Extrakte enthalten in der Regel neben den aktiven Inhaltsstoffen noch weitere lipophile Substanzen der extrahierten Pflanzen oder Pflanzenteile. Ganz besonders bevorzugt umfasst daher die Ölphase öldispergierbare Extrakte, die Pigmente oder Aromastoffe umfassen. Am meisten bevorzugt besteht die Ölphase daraus.

Bevorzugt ist eine erfindungsgemäße Zubereitung, die dadurch gekennzeichnet ist, dass die Öltröpfchen einen Durchmesser von 20 µm oder weniger, bevorzugt von 8 µm oder weniger und am meisten bevorzugt von 5 µm oder weniger aufweisen. Ein geringer Teilchendurchmesser verbessert die optischen Eigenschaften und die Stabilität, insbesondere die Langzeitstabilität der erfindungsgemäßen Zubereitung von damit gefärbten und/oder aromatisierten Lebensmitteln. Insbesondere führt eine kleine Teilchengröße zu einer sehr gleichmäßigen Verteilung der Farbe und des Aromas. Die Bestimmung des Durchmessers der Öltröpfchen geschieht in festen oder halbfesten Zubereitungen dadurch, dass diese in Wasser verteilt bzw. damit verdünnt werden, so dass die Durchmesser der Öltröpfchen bestimmt werden können.

Sowohl die Ölphase als auch das oberflächenaktive System der erfindungsgemäßen Zubereitung können Pigmente und Aromen enthalten. In der Regel sind die Farben der oberflächenaktiven Systeme jedoch wenig intensiv. Durch geeignete Wahl des Farbstoffs der Ölphase kann die Farbe des oberflächenaktiven Systems in der Regel in den Hintergrund gedrängt werden. Vorzugsweise wird die Farbe des oberflächenaktiven Systems auf den gewünschten Farbton der erfindungsgemäßen Zubereitung abgestimmt. So wird vorteilhaft ein aus Kürbis gewonnenes oberflächenaktives System (z. B. Kürbissaftkonzentrat) mit einer Ölphase kombiniert, die Kurkuma-Ölextrakt umfasst um ein Produkt mit kräftig gelber Farbtönung zu erhalten. Paprika-Öl kombiniert mit Tomatenmark ergibt ein Produkt mit kräftiger roter Farbe.

Die vorstehenden Ausführungen für den Farbton und die Farbstoffe gelten analog auch für das Aroma und die Aromen.

Die erfindungsgemäßen Zubereitungen können darüber hinaus weitere in Lebensmitteln übliche Inhaltsstoffe und Zusatzstoffe enthalten. Besonders zu erwähnen sind hier Zucker, die der Justierung der Trockenmasse dienen können. Aber auch Schutzstoffe wie Antioxidantien, zum Beispiel Tocopherol oder Ascorbinsäure oder pH-Regulatoren, zum Beispiel Säuren, können als Zusatzstoffe enthalten sein.

Bei der erfindungsgemäßen Zubereitung handelt es sich um eine Öl-in-Wasser-Emulsion. Dabei handelt es sich gleichzeitig um die bevorzugte Anwendungsform der erfindungsgemäßen Zubereitung. Solche Emulsionen lassen sich leicht in flüssige, halbflüssige oder breiige Lebensmittel einarbeiten, was zu sehr homogenen Mischungen und sehr homogenen Farbeindrücken führt. Es ist weiterhin bevorzugt, dass das oberflächenaktive System 40 bis 80 Gew.-% und besonders bevorzugt 50 bis 70 Gew.-% der wässrigen Phase ausmacht. Solche Emulsionen sind stabil und weisen eine günstige Viskosität auf. Sie sind daher im Herstellungsverfahren und in der Weiterverarbeitung zu gefärbten Lebensmitteln leicht handhabbar. Insbesondere sind solche Emulsionen lagerstabil.

Besonders bevorzugt sind erfindungsgemäßen Zubereitungen, bei denen es sich um Öl-in-Wasser-Emulsionen handelt, umfassend als Ölphase einer der hierin beschriebenen Ölphasen und eine wässrige Phase, wobei die wässrige Phase die Trockensubstanz von wenigstens einem Stoff umfasst, der ausgesucht ist aus der Gruppe bestehend aus Gemüsekonzentrat, Gemüsekonzentrat mit Pulpe, Gemüsesaftkonzentrat, Gemüsesaftkonzentrat mit Pulpe, Fruchtkonzentrat, Fruchtkonzentrat mit Pulpe, Fruchtsaftkonzentrat, und Fruchtsaftkonzentrat mit Pulpe. Die erfindungsgemäße Zubereitung kann auch diese Stoffe selbst und Mischungen davon umfassen. Erfindungsgemäß umfasst die Zubereitung in Form einer solchen Öl-in-Wasser-Emulsion die Trockensubstanz von wenigstens einem Stoff ausgesucht aus der Gruppe bestehend aus Gemüsesaftkonzentrat mit Pulpe und Fruchtsaftkonzentrat mit Pulpe. Die erfindungsgemäße Zubereitung in Form einer solchen Öl-in-Wasser-Emulsion kann auch diese Stoffe selbst und Mischungen davon umfassen. Erfindungsgemäß umfasst die erfindungsgemäße Zubereitung in Form einer solchen Öl-in-Wasser-Emulsion die Trockensubstanz von wenigstens einem Stoff ausgesucht aus der Gruppe bestehend aus Karottensaftkonzentrat, Karottensaftkonzentrat mit Pulpe, Kürbissaftkonzentrat und Kürbissaftkonzentrat mit Pulpe. Die erfindungsgemäße Zubereitung in Form einer solchen Öl-in-Wasser-Emulsion kann auch diese Stoffe selbst und Mischungen davon umfassen. Am meisten bevorzugt umfasst die erfindungsgemäße Zubereitung in Form einer solchen Öl-in-Wasser-Emulsion die Trockensubstanz von wenigstens einem Stoff ausgesucht aus der Gruppe bestehend aus Karottensaftkonzentrat und Karottensaftkonzentrat mit Pulpe. Solche Fruchtsaft- und Gemüsesaftkonzentrate sind käuflich erwerblich und haben häufig die richtige Konsistenz für die Herstellung der erfindungsgemäßen Zubereitungen. Sie sind daher meist ohne weitere Aufarbeitung, insbesondere ohne Einstellung des Wassergehalts, für die Herstellung der erfindungsgemäßen Emulsionen verwendbar. Insbesondere muss der Wassergehalt oft nicht gesondert angepasst werden.

Die erfindungsgemäßen Emulsionen können leicht durch Homogenisierung von Mischungen der Bestandteile hergestellt werden. Sie können ferner auch Feststoffe enthalten, zum Beispiel Feststoffpartikel von Früchten, die durch das Herstellungsverfahren nicht vollständig in Lösung gebracht werden. Bevorzugt sind etwaig enthaltene Feststoffpartikel kleiner als 50 µm, bevorzugt kleiner als 20 µm, besonders bevorzugt kleiner als 8 µm und am meisten bevorzugt kleiner als 5 µm. Ebenfalls bevorzugt sind die Feststoffpartikel nicht größer als die Ölpartikel. Die erfindungsgemäßen Zubereitungen können jedoch auch Feststoffe, wie zum Beispiel Fruchtstücke, Pulpe usw. enthalten, die den Zubereitungen nach der Homogenisierung zugesetzt wurden. Solche Feststoffe können zum Beispiel zum Verbleib im zu färbenden Endprodukt vorgesehen sein.

In einer weiteren Ausführungsform der erfindungsgemäßen Zubereitung handelt es sich um ein Pulver. Solche Pulver sind leicht durch Trocknung aus den entsprechenden Emulsionen zugänglich. Die erfindungsgemäßen Pulver haben den Vorteil, dass sie mit pulverförmigen oder festen Nahrungsmitteln vermischt oder auch in flüssige oder wässrige Nahrungsmittel eingerührt werden. Bevorzugt sind die Pulver vorgesehen zur Vermischung mit pulverförmigen Lebensmitteln, wie Backmischungen, Trocken-Dessertmischungen, Trockensuppen (Instantsuppen) oder Trockensaucen (Instantsaucen). Sie können vor dem Einarbeiten in Lebensmittel durch Rühren mit Wasser oder wässrigen Zusammensetzungen in erfindungsgemäße Zubereitungen überführt werden und anschließend in Lebensmittel eingearbeitet werden. Die erfindungsgemäßen Pulver sind ebenfalls stabil und insbesondere lagerstabil. Besonders bevorzugt ist eine erfindungsgemäße Zubereitung bei der es sich um ein redispergierbares Pulver handelt. Solche redispergierbaren Pulver sind zum Beispiel durch Sprühtrocknen der erfindungsgemäßen Zubereitungen in Form von Emulsionen leicht zugänglich.

Ein weiterer Aspekt der vorliegenden Erfindung ist ein Verfahren zur Herstellung einer Öl-in-Wasser-Emulsion, umfassend die folgenden Schritte:
- Bereitstellen eines Öls umfassend ein, zwei oder mehrere aktive Inhaltsstoffe ausgewählt aus der Gruppe bestehend aus Lebensmittelfarbstoffen, färbenden Lebensmitteln, Aromen und aromatisierenden Lebensmitteln,
- Bereitstellen von Pflanzenteilen, wobei die Pflanzenteile ausgesucht sind aus der Gruppe bestehend aus Karottenkonzentrat, Karottenkonzentrat mit Pulpe, Karottensaftkonzentrat, Karottensaftkonzentrat mit Pulpe, Kürbiskonzentrat, Kürbiskonzentrat mit Pulpe Kürbissaftkonzentrat und Kürbissaftkonzentrat mit Pulpe,
- Zusammengeben des Öls und des Pflanzenmaterials,
- Homogenisieren der Mischung zur Herstellung einer Öl-in-Wasser-Emulsion in der die Öltröpfchen einen Durchmesser von 50 µm oder weniger aufweisen.

Je nach Zweckmäßigkeit können vor oder nach dem Homogenisieren noch die vorstehend genannten Inhaltsstoffe und Zusatzstoffe zu der Mischung hinzuzugeben werden.

Bevorzugt wird homogenisiert, bis die Öltröpfchen einen Durchmesser von kleiner als 20 µm, besonders bevorzugt kleiner als 8 µm und am meisten bevorzugt kleiner als 5 µm aufweisen. Ein besonders bevorzugtes erfindungsgemäßes Verfahren ist dadurch gekennzeichnet, dass das Homogenisieren der Mischung in zwei Stufen erfolgt, wobei in einem ersten Schritt homogenisiert und in einem zweiten Schritt hochdruckhomogenisiert wird. Dabei wird unter Homogenisieren jede Art des Homogenisierens verstanden außer einer Hochdruckhomogenisierung. Ein ganz besonders bevorzugtes erfindungsgemäßes Verfahren ist dadurch gekennzeichnet, dass das Homogenisieren der Mischung in zwei Stufen erfolgt, wobei in einem ersten Schritt durch Dispergieren homogenisiert wird, insbesondere durch einen Ultra-Turrax^{®} Homogenisator und in einem zweiten Schritt eine Hochdruckhomogenisierung durchgeführt wird. Bevorzugt wird dabei im ersten Schritt das Homogenisieren bei einer Umdrehungsgeschwindigkeit von 5.000 bis 15.000 Umdrehungen pro Minute 10 Minuten lang durchgeführt. Im zweiten Schritt wird die Hochdruckhomogenisierung bevorzugt bei 500 bis 1200 bar durchgeführt, bis die Öltröpfchen die gewünschte Größe aufweisen.

Früchte- und Gemüse werden in verschiedensten Zubereitungsformen industriell angeboten. Im vorliegenden Verfahren werden bevorzugt als Pflanzen und Pflanzenteile solche Pflanzen und Pflanzenteile eingesetzt, wie hierin für die erfindungsgemäßen Zubereitungen beschrieben und insbesondere wie hierin für als bevorzugt beschriebenen erfindungsgemäßen Zubereitungen beschrieben. Da in der vorliegenden Erfindung ein Anteil der Trockensubstanz von etwa 40 bis 80 Gew.-% bevorzugt ist, werden bevorzugt solche Früchte- und Gemüseprodukte verwendet, die einen solchen Anteil oder einen ähnlichen Anteil an Trockensubstanz aufweisen. Erfindungsgemäß ist ein Verfahren wie hierin beschrieben, dadurch gekennzeichnet, dass die Pflanzenteile ausgesucht sind aus der Gruppe bestehend aus Karottenkonzentrat, Karottenkonzentrat mit Pulpe, Karottensaftkonzentrat, Karottensaftkonzentrat mit Pulpe, Kürbiskonzentrat, Kürbiskonzentrat mit Pulpe Kürbissaftkonzentrat und Kürbissaftkonzentrat mit Pulpe. Es können auch verschiedene Zubereitungsformen gemischt werden. So können Frucht- oder Gemüsesäfte mit Gemüsepulver oder Fruchtpulver versetzt werden, um die richtige Zusammensetzung zu erhalten. Ferner kann Wasser hinzugefügt oder durch Trocknen entfernt werden. Zucker können als weitere Zusatzstoffe hinzugegeben werden.

Werden Früchte, Gemüse oder Teile davon verwendet, so werden diese geeignet zerkleinert und gegebenenfalls getrocknet. Das Zerkleinern kann durch übliche Verfahren geschehen, die bevorzugt ausgesucht sind aus der Gruppe bestehend aus Schneiden, Mahlen, Pressen, Mazerieren, Zerkleinern in einem Mixer und Homogenisieren. Alle anderen bekannten Verfahren zum Zerkleinern sind jedoch ebenfalls geeignet. Auch das Trocknen kann durch übliche Verfahren vorgenommen werden und wird bevorzugt durch ein oder mehrere Verfahren vorgenommen, die ausgesucht sind aus der Gruppe bestehend aus Sprühtrocknung, Gefriertrocknung, Gefrierkonzentrierung, Vakuumtrocknung, einschließlich Vakuumschaumtrocknung, Schaumschichttrocknung, Walzentrocknung, Bewegtfilmtrocknung, Hochfrequenztrocknung, Sprüh-Coating-Verfahren und Mikrowellentrocknung. Bevorzugt ist die Sprühtrocknung. Beim Trocknen kann gerade so viel Wasser entfernt werden, dass eine geeignete Zusammensetzung der wässrigen Phase erreicht wird. Bevorzugt werden bei der Zerkleinerung und der Trocknung der Früchte und Gemüse keine weiteren Stoffe zugegeben. Insbesondere keine Stoffe, die im Verarbeitungsprodukt verbleiben.

Ein weiterer Aspekt der vorliegenden Erfindung ist ein Verfahren zur Herstellung eines Pulvers, worin die erfindungsgemäße Zubereitung in Form einer Öl-in-Wasser-Emulsion zu einem Pulver getrocknet wird. Zum Trocknen können alle vorstehend genannten Trocknungsmethoden verwendet werden. Bevorzugt ist die Trocknung durch Sprühtrocknung. Durch Sprühtrocknung kann ein redispergierbares Pulver erhalten werden, welches durch einfaches Mischen mit Wasser oder mit einer wässrigen Zusammensetzung redispergiert werden kann. Wird mit anderen Trocknungsmethoden als Sprühtrocknung getrocknet, so muss das Pulver unter Umständen durch intensives Rühren oder Homogenisieren redispergiert werden. Den erfindungsgemäßen Öl-in-Wasser-Emulsionen können vor dem Trocknen Trockenhilfsmittel wie Maltodextrin zugesetzt werden. Solche Hilfsmittel, die üblicherweise beim Trocknen zugesetzt werden und Ihre Wirkungen beim Trocknen entfalten, sind dem Fachmann bekannt.

Demgemäß ist ein weiterer Aspekt der vorliegenden Erfindung ein Verfahren zur Herstellung einer Öl-in-Wasser-Emulsion, worin eine erfindungsgemäße Zubereitung in Form eines Pulvers in Wasser redispergiert und so eine Öl-in-Wasser-Emulsion hergestellt wird. Das Redispergieren erfolgt bevorzugt durch einfaches zusammengeben mit Wasser oder einer wässrigen Zusammensetzung. Das Redispergieren kann aber auch durch Rühren oder Homogenisieren durchgeführt werden.

Alle Angaben die vorstehend für die erfindungsgemäßen Zubereitungen, deren Ölphase, deren oberflächenaktive System und den Wassergehalt gemacht sind gelten entsprechend auch für die Herstellungsverfahren. Insbesondere sind die für die erfindungsgemäßen Zubereitungen bevorzugten Ausführungsformen analog auch für die Verfahren bevorzugt.

Ein weiterer Aspekt der vorliegenden Erfindung ist eine Zubereitung, insbesondere eine erfindungsgemäße Zubereitung wie hierin beschrieben, dadurch gekennzeichnet, dass sie nach einem Verfahren wie hierin beschrieben hergestellt wird. Bevorzugt ist dabei eine erfindungsgemäße Zubereitung wie hierin beschrieben, dadurch gekennzeichnet, dass sie nach einem Verfahren wie hierin beschrieben hergestellt wird, bei dem das Homogenisieren der Mischung in zwei Stufen erfolgt, wie vorstehend beschrieben.

Lebensmittel können die erfindungsgemäßen Zubereitungen enthalten. Bevorzugt handelt es sich um wässrige oder pulverförmige Lebensmittel. Besonders bevorzugt handelt es sich um ein Lebensmittel ausgesucht aus der Gruppe bestehend aus Süßwaren, Fruchtzubereitungen, Milchprodukten, insbesondere Joghurt, Getränken, insbesondere aromatisierten Getränken, Backwaren, insbesondere Backmischungen, Trocken-Dessertmischungen, Trockensuppen (Instantsuppen), Trockensaucen (Instantsaucen) und Getränken. Bevorzugt enthalten solche Lebensmittel keine weiteren Emulgatoren.

Die erfindungsgemäße Zubereitung kann zur Färbung oder zum Aromatisieren von Lebensmitteln verwendet werden. Besonders bevorzugt ist die Verwendung der erfindungsgemäßen Zubereitung zur Färbung oder zum Aromatisieren von Lebensmitteln ausgesucht aus der Gruppe bestehend aus Milchprodukten, Süßwaren, Backwaren und Getränken. Ganz besonders bevorzugt ist die Verwendung der erfindungsgemäßen Zubereitung zur Färbung oder zum Aromatisieren von Lebensmitteln ausgesucht aus der Gruppe bestehend aus Milchprodukten, Süßwaren und Backwaren. Unter den Milchprodukten sind dabei wiederum solche ausgesucht aus der Gruppe bestehend aus Joghurt, Eiscreme und Käse bevorzugt.

Eine Sonderstellung nehmen dabei die Färbung und das Aromatisieren von Käse ein. Bei der Käseherstellung ist es wichtig, dass die Farbstoffe und/oder Aromastoffe im Käserückstand verbleiben, nicht jedoch in der Molke. Die bei der Käseherstellung gewonnene Molke soll nicht gefärbt oder aromatisiert sein, also nach Möglichkeit keinerlei Farb- und/oder Aromastoffe enthalten, da sie oft zu Babynahrung weiter verarbeitet, beziehungsweise weiterverkauft wird. Aromatisierte oder gefärbte Molke ist jedoch zur Weiterverarbeitung zu Babynahrung meist ungeeignet und wäre dann nicht weiter verwendbar und müsste verworfen oder zu weniger profitablen Produkten wie zum Beispiel Tiernahrung weiter verarbeitet werden. Die erfindungsgemäßen Zusammensetzungen führen aber bei der Verwendung zur Färbung von Käse dazu, dass nur ein sehr geringer Anteil der Farb- und/oder Aromastoffe in der Molke verbleibt. Am meisten bevorzugt ist daher die Verwendung der erfindungsgemäßen Zubereitung zur Färbung oder zum Aromatisieren von Käse.

Lebensmittel können mittels der erfindungsgemäßen Zubereitung gefärbt sein bzw. werden. Besonders bevorzugt sind Lebensmittel ausgesucht aus der Gruppe bestehend aus Milchprodukten, Süßwaren, Backwaren und Getränken, die mittels der erfindungsgemäßen Zubereitung aromatisiert oder gefärbt sind. Ganz besonders bevorzugt sind Lebensmittel ausgesucht aus der Gruppe bestehend aus Milchprodukten, Süßwaren und Backwaren, die mittels der erfindungsgemäßen Zubereitung gefärbt oder aromatisiert sind. Unter den Milchprodukten sind dabei wiederum solche Lebensmittel bevorzugt, die ausgesucht aus der Gruppe bestehend aus Joghurt, Eiscreme und Käse, die mittels der erfindungsgemäßen Zubereitung gefärbt oder aromatisiert sind. Am meisten bevorzugt ist Käse, der mittels der erfindungsgemäßen Zubereitung gefärbt oder aromatisiert ist.

### Beispiele:

### Rohstoffe:

1. Karottensaftkonzentrat mit Pulpe; erhältlich von: riha Wesergold Getränke GmbH & Co. KG, Rinteln, Deutschland; Lösliche Feststoffe: 50 +/- 5 °Brix; pH: 4,3 +/- 0,3; Viskosität: 1000 +/- 500 MPa*s. 2. Zitronensaftkonzentrat; erhältlich von: IPRONA AG - S.p.A., Lana, Italien; Konzentration: 8-fach; Lösliche Feststoffe (20 °C): 55,0 bis 57,0 °Brix; pH: 1,3 - 2,3; Säuregehalt als Zitronensäure: 350,0 - 450,0; Dichte: 1,310 g/ml. 3. Kürbissaftkonzentrat ("Pumpkin Juice Concentrate"); erhältlich von: Diana Naturals, Antrain, Frankreich; Konzentration: 8,6-fach; Gesamtkohlenhydrate 41 g, 59 bis 61 °Brix; pH (10-prozentige Lösung): 4,8 bis 6,8; Säuregehalt als Zitronensäure: 0,3 - 1,7 %; Dichte: 1,310 g/ml. 4. Curcuma-Oleoresin ("Oleoresin Turmeric"); erhältlich von: Synthite, Indien. 5. Paprika-Öl ("NatureBrite^{™} Paprika Oil"); erhältlich von: Kalsec^{®} Inc., Kalamazoo, Michigan, USA. 6. Gummi arabicum (E 414, "Spray Dried Gum Acacia 396 A"); erhältlich von: Alland & Robert, Paris, France; Restfeuchte kleiner oder gleich 10 %. 7. Maltodextrin ("Avebe^{™} MD 20 P); erhältlich von Coöperatie AVEBE U.A., Veendam, Niederlande; Kohlenhydratgehalt 94,5 %. 8. Maltodextrin ("Glucidex^{®} IT P12"); erhältlich von Roquette GmbH, Frankfurt, Deutschland; Restfeuchte 5 % max. 9. Zucker ("Weißzucker fein Version 1401"); erhältlich von Ferdinand Kreutzer Sabamühle GmbH, Nürnberg, Deutschland. 10. Joghurt, handelsüblicher Joghurt ohne irgendwelche Zutaten mit einem Fettgehalt von 3,5 %.

### Messmethoden:

### 1. Partikelgrößen

Mikroskop: Axio Lab.A1 mit 1000x Vergrößerung in Verbindung mit der Kamera Axio-Cam MR Rev3 und dem Auswertungsprogram AxioVision, Version 4.8.2 (erhältlich von Carl Zeiss Microscopy GmbH, Königsallee 9 - 21, 37081 Göttingen, Deutschland).

Zur Messung der Teilchengröße werden 5 unabhängige Proben à 100 ml aus dem Produktionsansatz entnommen. Aus jeder Probe wird mit einer Pasteurpipette eine 2 ml Probe aufgezogen. Aus jeder aufgezogenen Probe wird ein Tropfen auf einen Glas-Objektträger aufgetragen, welcher sodann mit einem Deckglas von 2 x 2 cm Größe abgedeckt wird. Darauf wird ein Tropfen Immersionsöl aufgetragen. Der Objektträger mit der Probe wird durch den Objekthalter auf dem Kreuztisch eingespannt, das Mikroskop wird auf 1000-fache Vergrößerung eingestellt, das Objektiv wird zentrisch zur Probe ausgerichtet und nach Eintauchen des Objektivs in den Tropfen des Immersionsöl wird das Bild scharf gestellt. Mit der installierten Mikroskopkamera Zeiss "Axio-Cam MR Rev3" und der Software "AxioVision" wird ein Bild aufgenommen. In jedem Bild wird der Durchmesser des größten Öltröpfchens gemessen, wobei der größte Durchmesser der Öltröpfchen der Zusammensetzung im Sinne dieser Erfindung der Mittelwert der jeweils mikroskopisch gemessenen Durchmesser der größten Öltröpfchen der fünf Tropfen (Proben) ist. Der Durchmesser aller Öltröpfchen ist gleich oder kleiner als der größte Durchmesser der Öltröpfchen.

### 2. Farbwert E1%

UV-VIS Spektrophotometer: Shimadzu UV-VIS Spectrophotometer UV-1800 (erhältlich von Shimadzu Europa GmbH, Albert-Hahn-Straße 6-10, 47269 Duisburg, Deutschland) Arbeitsmaterialien:
Quarzglasküvette: Präzisions-Küvetten (Quarzglas SUPRASIL) 100-QS Schichtdicke 10 mm von Hellma GmbH & Co. KG, Klosterrunsstraße 5, 79379 Müllheim, Deutschland;
Messkolben: 100 ml Messkolben Blaubrand, A mit NS12/21 von Brand GmbH & Co. KG, Postfach 1155, 97861 Wertheim, Deutschland
Einwegspritze: 10 ml (12 ml) Soft-Ject^{®} Einmalspritze von Henke Sass Wolf, Keltenstraße 1, 78532 Tuttlingen, Deutschland
Spritzenfilter: Nalgene Syringe Filter, Sterile Nylon membrane, 0.2 µm 25mm diameter von Thermo Scientific Nalgene Products, 75 Panorama Creek Drive, Rochester, NY 14625-2385.

### 3. Farbton CIELAB (L*a*b*C*h*-Farbraum)

Spektrophotometer: Minolta Spectrophotometer CM-600d (erhältlich von Konica Minolta Business Solutions Deutschland GmbH, Europaallee 17, 30855 Langenhagen, Deutschland) unter den folgenden Bedingungen: Beobachter: 2 Grad, Erste Lichtart: D50.

### Geräte zur Dispergierung:

Zahnkranzdispergierung: Ultra-Turrax T50 basic Motor mit S N 50 G 45 FF Dispergierwerkzeug (erhältlich von IKA^{®}-Werke GmbH & Co. KG, 79219 Staufen, Deutschland); Hochdruckhomogenisator: APV1000 (erhältlich von: APV, An SPX Brand, Herstedøstervej 27-29, C3, 1st Floor, DK-2620 Albertslund, Denmark).

### Beispiel 1:

Herstellen einer erfindungsgemäßen Zubereitung aus Karottensaftkonzentrat und Curcuma-Ölextrakt 9260 g eines Karottensaftkonzentrats mit Pulpe mit 50 Brix-Graden und 240 g Zitronensaftkonzentrat mit 55 Brix-Graden werden zusammengegeben und unter Rühren innerhalb von 30 Minuten auf 80 °C erhitzt. Parallel dazu werden 500 g Curcuma-Oleoresin in 30 Minuten unter Rühren schrittweise auf 140 °C erhitzt. Es wird für weitere 5 Minuten gerührt, wobei das Curcuma-Oleoresin nicht mehr trüb erscheint. Anschließend wird das 140 °C warme Curcuma-Oleoresin unter Rühren über eine Zeitdauer von 30 Minuten in die Wasserphase eingerührt, wobei die Wasserphase bei der Temperatur von 80 °C gehalten wird. Anschließend wird die Mischung bei 80 °C mit einem Rotor-Stator Ultra-Turrax bei einer Frequenz von 10.000 Umdrehungen pro Minute 10 Minuten lang homogenisiert. Anschließend wird eine Hochdruckhomogenisierung bei 800 bar mit nur einer Passage der Emulsion durch den Hochdruckhomogenisator APV1000 durchgeführt. Die Tröpfchen des Produkts weisen eine Tröpfchengröße von 4,65 µm oder weniger auf.

### Beispiel 2:

### Herstellen einer erfindungsgemäßen Zubereitung aus Karottensaftkonzentrat und Paprika-Öl

8230 g eines Karottensaftkonzentrats mit Pulpe mit 50 Brix-Graden, 350 g Wasser und 240 g Zitronensaftkonzentrat mit 55 Brix-Graden werden zusammengegeben und unter Rühren innerhalb von 30 Minuten auf 80 °C erhitzt. Anschließend werden bei 80 °C 150 g Zucker eingerührt. Parallel dazu werden 1000 g Paprika-Öl in 30 Minuten unter Rühren auf 80 °C erhitzt. Dann werden 30 g Kaliumhydroxid zu der Ölphase gegeben und es wird 30 Minuten bei 80 °C weitergerührt. Anschließend wird die Ölphase unter Rühren über eine Zeitdauer von 30 Minuten in die Wasserphase eingerührt, wobei Ölphase und Wasserphase bei der Temperatur von 80 °C gehalten werden. Anschließend wird die Mischung bei 80 °C mit einem Rotor-Stator Ultra-Turrax bei einer Frequenz von 10.000 Umdrehungen pro Minute 10 Minuten lang homogenisiert. Anschließend wird eine Hochdruckhomogenisierung bei 800 bar mit nur einer Passage der Emulsion durch den Hochdruckhomogenisator APV1000 durchgeführt. Die Tröpfchen des Produkts weisen eine Tröpfchengröße von 3,26 µm oder weniger auf.

### Beispiel 3:

### Herstellen einer erfindungsgemäßen Zubereitung aus Kürbissaftkonzentrat und Paprika-Öl

Aus 9230 g Kürbissaftkonzentrat, 30 g Kaliumhydroxid, 240 g Zitronensaftkonzentrat mit 55 Brix-Graden und 500 g Paprika-Öl wird entsprechend der für Beispiel 2 genannten Vorschrift eine erfindungsgemäße Zubereitung hergestellt. Die Tröpfchen des Produkts weisen eine Tröpfchengröße von 2,16 µm oder weniger auf.

### Vergleichsbeispiel 1:

### Herstellen einer Zusammensetzung umfassend Gummi arabicum und Curcuma-Oleoresin

10 kg Wasser und 600 g Zitronensaftkonzentrat mit 55 Brix-Graden werden vorgelegt und 6 kg Gummi arabicum werden bei 45 °C über eine Zeitspanne von 30 Minuten eingerührt. Wenn alles Gummi arabicum gelöst ist, werden 1940 g Maltodextrin ("Avebe") hinzugegeben und bei 45 °C durch Rühren in Lösung gebracht. Parallel dazu werden 1460 g Curcuma-Oleoresin in 30 Minuten unter Rühren schrittweise auf 140 °C erhitzt. Es wird für weitere 5 Minuten gerührt, wobei das Curcuma-Oleoresin transparent wird. Anschließend wird das 140 °C warme Curcuma-Oleoresin unter Rühren über eine Zeitdauer von 10 Minuten in die 45 °C warme Wasserphase eingerührt. Anschließend wird die Mischung bei 45 °C mit einem Rotor-Stator Ultra-Turrax bei einer Frequenz von 10.000 Umdrehungen pro Minute 15 Minuten lang homogenisiert. Die Tröpfchen des Produkts weisen eine Tröpfchengröße von 2,52 µm oder weniger auf.

### Vergleichsbeispiel 2:

### Herstellen einer Zusammensetzung umfassend Gummi arabicum und Paprika-Öl

10 kg Wasser und 600 g Zitronensaftkonzentrat mit 55 Brix-Graden werden vorgelegt und 6 kg Gummi arabicum werden bei 45 °C über eine Zeitspanne von 30 Minuten eingerührt. Anschließend werden 1840 g Maltodextrin ("Avebe") hinzugegeben und bei 45 °C durch Rühren in Lösung gebracht. Parallel dazu werden 1500 g Paprika-Öl in 30 Minuten unter Rühren auf 80 °C erhitzt. Dann werden 60 g 50-prozentige Kaliumhydroxid-Lösung in Wasser zu der Ölphase gegeben und es wird 30 Minuten bei 80 °C weitergerührt. Anschließend wird die Ölphase unter Rühren über eine Zeitdauer von 30 Minuten in die Wasserphase eingerührt, wobei Ölphase und Wasserphase bei der Temperatur von 80 °C gehalten werden. Anschließend wird die Mischung bei 80 °C mit einem Rotor-Stator Ultra-Turrax bei einer Frequenz von 10.000 Umdrehungen pro Minute 10 Minuten lang homogenisiert. Die Tröpfchen des Produkts weisen eine Tröpfchengröße von 1,89 µm oder weniger auf.

### Farbintensität

**Tabelle 1: Farbtonvergleich**

| L*a*b*C*h*-Werte: Von einer vorstehend beschriebenen Zubereitung wird ein gefärbter Joghurt hergestellt, indem 0,15 g der Zubereitung in 50 g eines 3,5% Vollfettjoghurts eingerührt werden. Die L*a*b*C*h*-Werte werden gemessen, bezogen auf einen Farbwert E1% = 4,25, indem eine Probe des Joghurts in das Spektrophotometer eingebracht wird. | | | | |
|---|---|---|---|---|
| | Beispiel 1 | Vergleichsbeispiel 1 | Beispiel 2 | Vergleichsbeispiel 2 |
| | Karottensaft/ Curcuma-Öl. | Gum. arab./ Curcuma-Öl. | Karottensaft/ Paprika-Öl | Gum. arab./ Paprika-Öl |
| E1% | 25,88¹⁾ | 36,50²⁾ | 9,29¹⁾ | 4,70³⁾ |
| Menge | 0,0246 g | 0,0175 g | 0,0686 g | 0,1356 g |
| L* | 90,97 | 90,94 | 86,72 | 86,73 |
| a* | -3,36 | -1,94 | 8,01 | 9,23 |
| b* | 21,15 | 18,84 | 19,33 | 22,05 |
| C* | 21,41 | 18,94 | 20,93 | 23,90 |
| h* | 99,02 | 95,87 | 67,49 | 67,29 |

| | | | | |
|---|---|---|---|---|
| ¹⁾ E1% in Wasser/Dichlormethan/Aceton (20/5/75) filtriert durch 0,2 µm Spritzenfilter 454 nm ²⁾ E1% in Wasser / Ethanol (10/90) 420 nm ³⁾ E1% in Wasser / Aceton (10/90) 462 nm | | | | |

Der Vergleich der Farbtöne der Produkte der Beispiele 1 und 2 mit den herkömmlichen färbenden Zusammensetzungen gemäß Vergleichsbeispielen 1 und 2 zeigt, dass die erfindungsgemäßen Zubereitungen ähnliche Farbtöne aufweisen, wie die bekannten Zusammensetzungen. Die Unterschiede sind selbst für den Fachmann mit bloßem Auge kaum auszumachen. Demgemäß können die erfindungsgemäßen Zubereitungen in gleicher Weise wie herkömmliche Färbemittel eingesetzt werden.

Beispiel 4: Herstellung eines Pulvers aus der Zubereitung gemäß Beispiel 1 9,5 kg des Produkts von Beispiel 1 und 7 kg Maltodextrin ("Glucidex") werden in 30,4 kg Trinkwasser gelöst. Das erhaltene Gemisch wird einer Sprühtrocknung unterworfen. Die Zuluft weist dabei eine Temperatur von 185 °C und die Abluft eine Temperatur von 92,0 °C auf. Es wird ein trockenes Pulver erhalten. Die Ausbeute an erhaltener Trockensubstanz beträgt 11,8 kg (83,88 %). Die Extinktion **(E1%** 426 nm in Wasser/Dichlormethan/Aceton, filtrieren durch 0,2µm (20/5/R)) beträgt 18,4. Der Farbton des Pulvers im **L*a*b*C*h*-**Farbraum ist: **L*:** 63,16, **a*:** 28,55, **b*:** 68,51, **C*:** 74,23, **h*:** 67,38. Der Wassergehalt (IR) beträgt 1,90 % und der pH in 10-prozentiger Lösung in Wasser 4,90. Das Pulver ist wasserlöslich.

Beispiel 5: Herstellung eines Pulvers aus der Zubereitung gemäß Beispiel 2 9,5 kg des Produkts von Beispiel 2 und 6,6 kg Maltodextrin ("Glucidex") werden in 29,2 kg Trinkwasser gelöst. Das erhaltene Gemisch wird einer Sprühtrocknung unterworfen. Die Zuluft weist dabei eine Temperatur von 185 °C und die Abluft eine Temperatur von 92,0 °C auf. Es wird ein trockenes Pulver erhalten. Die Ausbeute an erhaltener Trockensubstanz beträgt 11,170 kg (82,12 %). Die Extinktion (E1% 454 nm in Wasser/Dichlormethan/Aceton, filtrieren durch 0,2µm (20/5/R)) beträgt 6,29. Der Farbton des Pulvers im **L*a*b*C*h*-**Farbraum ist: **L*:** 55,82, **a*:** 41,38, **b*:** 61,33, **C*:** 73,49, **h*:** 55,99. Der Wassergehalt (IR) beträgt 1,83 % und der pH in 10-prozentiger Lösung in Wasser 5,0. Das Pulver ist wasserlöslich.

### Beispiel 6: Färben von Käse

500 g frische Vollmilch mit 3,5% Fettgehalt (auch ESL-Milch wäre geeignet) werden in ein 1000ml Becherglas mit hoher Form gegeben und mit Milchsäure (L(+)-Milchsäure 90% in Wasser, CAS-Nummer: 79-33-4, Acros Organics) unter Rühren auf pH 6,2 eingestellt. Als pH-Meter wird ein Gerät von Mettler Toledo des Typs Seven Easy, Inlab Solids Pro-ISM verwendet, zum Rühren ein Magnetrührer der Firma IKA vom Typ Ikamag Reo). Dann wird die Milch im Wasserbad auf 38°C erwärmt und 0,2 g der erfindungsgemäßen Zubereitung gemäß Beispiel 1 als färbende Zubereitung und 0,4 g Lab hinzugefügt. Die färbende Zubereitung und das Lab werden mit einem Kochlöffel homogen in der Milch verrührt. Anschließend wird die Milch für 20 Minuten bei 38°C im Wasserbad ruhen gelassen.

Die so entstandene Gallerte wird im Becherglas mit einem Messer mit einer ca. 15-20 cm langen glatten Klinge in ca. 2-3 mm große Stücke (Bruch) geschnitten. Der Bruch wird weitere 30 Minuten bei 38°C im Wasserbad ruhen gelassen. Sodann werden Molke und Käsebruch mit Hilfe eines Faltenfilters (Whatman 595 ½ Faltenfilter, Durchmesser 240mm) getrennt. Der Käsebruch wird in saugfähiges Papier eingewickelt und mit einer ca. 3-4 kg schweren Metallplatte für 1 Stunde gepresst.

Zum Vergleich wurde der Versuch identisch, aber ohne den Einsatz der erfindungsgemäßen Zubereitung wiederholt. Es zeigt sich, dass der gefärbte Rohkäse eine deutliche gelbe Färbung aufweist, während der ohne die erfindungsgemäße Zubereitung hergestellt Rohkäse praktisch eine weiße Farbe aufweist. Ein direkt der Vergleich der beiden Molken zeigt nur eine kaum merkliche Verfärbung der Molke, die unter Zusatz der erfindungsgemäßen Zubereitung hergestellt wurde. Damit ist die erfindungsgemäße Zubereitung außerordentlich gut geeignet für das Färben von Käse.

## Patentansprüche

1. Zubereitung umfassend
(i) eine Ölphase umfassend
- ein, zwei oder mehrere aktive Inhaltsstoffe ausgewählt aus der Gruppe bestehend aus Lebensmittelfarbstoffen, färbenden Lebensmitteln, Aromen und aromatisierenden Lebensmitteln,
- wobei die Ölphase in Form von Öltröpfchen vorliegt und
- die Öltröpfchen einen Durchmesser von 50 µm oder weniger aufweisen, wobei zur Bestimmung des Durchmessers der Öltröpfchen das in der Beschreibung genannte Messverfahren eingesetzt wird,
(ii) ein oberflächenaktives System, umfassend
- die Trockensubstanz von einem, zwei oder mehreren Nahrungsmitteln ausgesucht aus der Gruppe bestehend aus Früchten und Gemüse und Teilen davon und
(iii) Wasser,
wobei die Zubereitung wenigstens 10 Gew.-% der Trockensubstanz von einem, zwei oder mehreren Nahrungsmitteln ausgesucht aus der Gruppe bestehend aus Früchten und Gemüse und Teilen davon enthält, wobei die Gewichtsprozente auf das Gewicht der Zubereitung bezogen sind und
wobei die Nahrungsmittel ausgesucht sind aus der Gruppe bestehend aus Karottenkonzentrat, Karottenkonzentrat mit Pulpe, Karottensaftkonzentrat, Karottensaftkonzentrat mit Pulpe, Kürbiskonzentrat, Kürbiskonzentrat mit Pulpe Kürbissaftkonzentrat und Kürbissaftkonzentrat mit Pulpe,
wobei die Zubereitung bis zu 20 Gew.-% Ölphase und bis zu 70 Gew.-% Wasser umfasst,
wobei es sich um eine Öl-in-Wasser-Emulsion handelt,
**dadurch gekennzeichnet, dass** die Zubereitung keinen Lebensmittel-Zusatzstoff enthält, der ausgesucht ist aus der Gruppe bestehend aus Lecithinen (E 322), Gummi arabicum (E414), Polysorbate (E 432 - E 436), Ammoniumsalze der Phosphatidsäuren (E 442), Saccharoseacetatisobutyrat (E 444), Salze von Speisefettsäuren (E 470), Mono- und Diglyceride von Speisefettsäuren (E 471), veresterte Mono- und Diglyceride von Speisefettsäuren (E 472), Essigsäureester von Mono- und Diglyceriden von Speisefettsäuren (E 472a), Citronensäureester von Mono- und Diglyceriden von Speisefettsäuren (E 472c), Zuckerester von Speisefettsäuren (E 473), Zuckerglyceride (E 474), Polyglycerinester von Speisefettsäuren (E 475), Polyglycerin-Polyricinoleat (E 476), Propylenglycolester von Speisefettsäuren (E 477), Stearoylacetylate (E 481, E 482), Stearyltatrat (E 483), Sorbitanester von Speisefettsäuren (E 491 - E 495), Saponinen (z.B. Quillaja-Extrakt E 999) und modifizierten Stärken E1450.

2. Zubereitung gemäß Anspruch 1, umfassend Ölphase und oberflächenaktives System im Gewichtsverhältnis 1 zu 1 bis 1 zu 80.

3. Zubereitung gemäß einem der vorangehenden Ansprüche, **dadurch gekennzeichnet, dass** die Ölphase wenigstens einen Kurkuma-Ölextrakt oder wenigstens ein Paprika-Öl oder beide umfasst.

4. Zubereitung gemäß einem der vorangehenden Ansprüche, **dadurch gekennzeichnet, dass** die Ölphase zusätzlich wenigstens ein Pflanzenöl umfasst.

5. Zubereitung gemäß einem der vorherigen Ansprüche, **dadurch gekennzeichnet, dass** das oberflächenaktive System 40 bis 80 Gew.-% der wässrigen Phase ausmacht.

6. Zubereitung gemäß einem der vorangehenden Ansprüche, **dadurch gekennzeichnet, dass** die Öltröpfchen einen Durchmesser von 20 µm oder weniger aufweisen, wobei zur Bestimmung des Durchmessers der Öltröpfchen das in der Beschreibung genannte Messverfahren eingesetzt wird.

7. Verfahren zur Herstellung einer Öl-in-Wasser-Emulsion gemäß einem der vorhergehenden Ansprüche, umfassend die folgenden Schritte:
- Bereitstellen eines Öls umfassend ein, zwei oder mehrere aktive Inhaltsstoffe ausgewählt aus der Gruppe bestehend aus Lebensmittelfarbstoffen, färbenden Lebensmitteln, Aromen und aromatisierenden Lebensmitteln,
- Bereitstellen von Pflanzenteilen, wobei die Pflanzenteile ausgesucht sind aus der Gruppe bestehend aus Karottenkonzentrat, Karottenkonzentrat mit Pulpe, Karottensaftkonzentrat, Karottensaftkonzentrat mit Pulpe, Kürbiskonzentrat, Kürbiskonzentrat mit Pulpe Kürbissaftkonzentrat und Kürbissaftkonzentrat mit Pulpe,
- Zusammengeben des Öls und des Pflanzenmaterials
- Homogenisieren der Mischung zur Herstellung einer Öl-in-Wasser-Emulsion bis die Öltröpfchen einen Durchmesser von 50 µm oder weniger aufweisen.

8. Verfahren zur Herstellung eines Pulvers, worin eine Öl-in-Wasser-Emulsion gemäß einem der Ansprüche 1 bis 6 und/oder eine Öl-in-Wasser-Emulsion hergestellt nach einem Verfahren gemäß Anspruch 7 zu einem Pulver getrocknet wird.

9. Verfahren zur Herstellung einer Öl-in-Wasser-Emulsion, worin ein Pulver hergestellt nach dem Verfahren gemäß Anspruch 8 in Wasser redispergiert und so eine Öl-in-Wasser-Emulsion hergestellt wird.

## Claims

1. Preparation comprising
(i) an oil phase comprising
- one, two, or more active ingredients selected from the group consisting of food colorings, coloring foods, flavors, and flavoring foods,
- wherein the oil phase is present in the form of oil droplets, and
- the oil droplets have a diameter of 50 µm or less, wherein the measurement method mentioned in the description is used to determine the diameter of the oil droplets,
(ii) a surface-active system comprising
- the dry matter of one, two, or more foods selected from the group consisting of fruits and vegetables and parts thereof, and
(iii) water,
wherein the preparation contains at least 10% by weight of the dry matter of one, two or more foods selected from the group consisting of fruits and vegetables and parts thereof, wherein the percentages by weight are based on the weight of the preparation, and
wherein the foods are selected from the group consisting of carrot concentrate, carrot concentrate with pulp, carrot juice concentrate, carrot juice concentrate with pulp, pumpkin concentrate, pumpkin concentrate with pulp, pumpkin juice concentrate, and pumpkin juice concentrate with pulp,
wherein the preparation comprises up to 20 wt.% oil phase and up to 70 wt.% water,
wherein it is an oil-in-water emulsion,
**characterized in that** the preparation does not contain any food additive selected from the group consisting of lecithins (E 322), gum arabic (E 414), polysorbates (E 432 - E 436), ammonium salts of phosphatidic acids (E 442), sucrose acetate isobutyrate (E 444), salts of fatty acids (E 470), mono- and diglycerides of fatty acids (E 471), esterified mono- and diglycerides of fatty acids (E 472), acetic acid esters of mono- and diglycerides of fatty acids (E 472a), citric acid esters of mono- and diglycerides of fatty acids (E 472c), sugar esters of fatty acids (E 473), sugar glycerides (E 474), polyglycerol esters of fatty acids (E 475), polyglycerol polyricinoleate (E 476), propylene glycol esters of fatty acids (E 477), stearoyl acetylates (E 481, E 482), stearyl tartrate (E 483), sorbitan esters of fatty acids (E 491 - E 495), saponins (e.g., quillaja extract E 999) and modified starches E1450.

2. Preparation according to claim 1, comprising oil phase and surface-active system in a weight ratio of 1 to 1 to 1 to 80.

3. Preparation according to one of the preceding claims, **characterized in that** the oil phase comprises at least one turmeric oil extract or at least one paprika oil or both.

4. Preparation according to one of the preceding claims, **characterized in that** the oil phase additionally comprises at least one vegetable oil.

5. Preparation according to one of the preceding claims, **characterized in that** the surface-active system comprises 40 to 80% by weight of the aqueous phase.

6. Preparation according to one of the preceding claims, **characterized in that** the oil droplets have a diameter of 20 µm or less, wherein the measurement method mentioned in the description is used to determine the diameter of the oil droplets.

7. Method for producing an oil-in-water emulsion according to of the preceding claims, comprising the following steps:
- providing an oil comprising one, two, or more active ingredients selected from the group consisting of food colorings, coloring foods, flavors, and flavoring foods,
- providing plant parts, wherein the plant parts are selected from the group consisting of carrot concentrate, carrot concentrate with pulp, carrot juice concentrate, carrot juice concentrate with pulp, pumpkin concentrate, pumpkin concentrate with pulp, pumpkin juice concentrate, and pumpkin juice concentrate with pulp,
- combining the oil and the plant material
- homogenizing the mixture to produce an oil-in-water emulsion until the oil droplets have a diameter of 50 µm or less.

8. Method for producing a powder, wherein an oil-in-water emulsion according to one of claims 1 to 6 and/or an oil-in-water emulsion produced according to a method according to claim 7 is dried to a powder.

9. Method for producing an oil-in-water emulsion, wherein a powder produced according to the method according to claim 8 is redispersed in water, thereby producing an oil-in-water emulsion.

## Revendications

1. Préparation comprenant
(i) une phase huileuse comprenant
- un, deux ou plusieurs ingrédients actifs choisis dans le groupe constitué par des colorants alimentaires, des aliments colorants, des arômes et des aliments aromatisants,
- la phase huileuse se présentant sous forme de gouttelettes d'huile, et
- les gouttelettes d'huile ont un diamètre de 50 µm ou moins, le diamètre des gouttelettes d'huile étant déterminé à l'aide du procédé de mesure mentionné dans la description,
(ii) un système tensioactif comprenant
- la matière sèche d'un, deux ou plusieurs aliments choisis dans le groupe constitué par des fruits et légumes et leurs parties, et
(iii) de l'eau,
la préparation contenant au moins 10 % en poids de la matière sèche d'un, deux ou plusieurs aliments choisis dans le groupe constitué par des fruits et des légumes et leurs parties, les pourcentages en poids étant rapportés au poids de la préparation, et
les aliments étant choisis parmi le groupe constitué du concentré de carottes, du concentré de carottes avec pulpe, du concentré de jus de carottes, du concentré de jus de carottes avec pulpe, du concentré de potiron, du concentré de potiron avec pulpe, du concentré de jus de potiron et du concentré de jus de potiron avec pulpe,
la préparation comprenant jusqu'à 20 % en poids de phase huileuse et jusqu'à 70 % en poids d'eau,
il s'agit d'une émulsion huile dans eau,
**caractérisée en ce que** la préparation ne contient aucun additif alimentaire choisi dans le groupe constitué par des lécithines (E 322), de la gomme arabique (E 414), polysorbates (E 432 - E 436), sels d'ammonium des acides phosphatidiques (E 442), acétate-isobutyrate de saccharose (E 444), sels d'acides gras alimentaires (E 470), mono- et diglycérides d'acides gras alimentaires (E 471), mono- et diglycérides estérifiés d'acides gras alimentaires (E 472), esters acétiques de mono- et diglycérides d'acides gras alimentaires (E 472a), esters acides citriques des mono- et diglycérides d'acides gras alimentaires (E 472c), esters de sucre d'acides gras alimentaires (E 473), glycérides de sucre (E 474), esters polyglycériques d'acides gras alimentaires (E 475), polyricinoléate de polyglycérol (E 476), esters de propylène glycol d'acides gras alimentaires (E 477), acétylates de stéaroyle (E 481, E 482), tartrate de stéaryle (E 483), esters de sorbitane d'acides gras alimentaires (E 491 - E 495), saponines (par exemple extrait de quillaja E 999) et amidons modifiés E1450.

2. Préparation selon la revendication 1, comprenant phase huileuse et système tensioactif dans un rapport pondéral de 1 pour 1 à 1 pour 80.

3. Préparation selon l'une des revendications précédentes, **caractérisée en ce que** la phase huileuse comprend au moins un extrait d'huile de curcuma ou au moins une huile de paprika ou les deux.

4. Préparation selon l'une des revendications précédentes, **caractérisée en ce que** la phase huileuse comprend en outre au moins une huile végétale.

5. Préparation selon l'une des revendications précédentes, caractérisée en ce dans laquelle le système tensioactif représente 40 à 80 % en poids de la phase aqueuse.

6. Préparation selon l'une des revendications précédentes, **caractérisée en ce que** les gouttelettes d'huile ont un diamètre de 20 µm ou moins, le diamètre des gouttelettes d'huile étant déterminé à l'aide du procédé de mesure mentionné dans la description.

7. Procédé de préparation d'une émulsion huile dans eau selon l'une des revendications précédentes, comprenant les étapes suivantes :
- fourniture d'une huile comprenant un, deux ou plusieurs ingrédients actifs choisis dans le groupe constitué par des colorants alimentaires, des aliments colorants, des arômes et des aliments aromatisants,
- fournir des parties de plantes, les parties de plantes étant choisies dans le groupe constitué par du concentré de carotte, du concentré de carotte avec pulpe, du concentré de jus de carotte, du concentré de jus de carotte avec pulpe, du concentré de potiron, du concentré de potiron avec pulpe, du concentré de jus de potiron et du concentré de jus de potiron avec pulpe,
- mélanger l'huile et la matière végétale
- homogénéisation du mélange pour produire une émulsion huile dans eau jusqu'à ce que les gouttelettes d'huile aient un diamètre de 50 µm ou moins.

8. Procédé de préparation d'une poudre, dans lequel une émulsion huile dans eau selon l'une des revendications 1 à 6 et / ou une émulsion huile dans eau fabriquée selon un procédé selon la revendication 7 est séchée pour obtenir une poudre.

9. Procédé de préparation d'une émulsion huile dans eau, dans lequel une poudre fabriquée selon le procédé selon la revendication 8 est redispersée dans de l'eau, ce qui permet d'obtenir une émulsion huile dans eau.
